# EUROPÄISCHE PATENTSCHRIFT

(11) **EP 1 277 781 B1**
(45) Veröffentlichungstag und Bekanntmachung des Hinweises auf die Patenterteilung: **25.03.2009**
(21) Anmeldenummer: 02014916.7
(22) Anmeldetag: 05.07.2002
(51) Int. Cl.: C08G 64/30, C08G 64/06, C08G 64/10

(54) **Verfahren zur Herstellung von Copolycarbonaten**
Process for preparing copolycarbonates
Procédé de préparation de copolycarbonates

(30) Priorität: 16.07.2001 DE 10134480
(43) Veröffentlichungstag der Anmeldung: 22.01.2003
(73) Patentinhaber: Bayer MaterialScience AG, 51368 Leverkusen (DE)
(72) Erfinder: Kratschmer, Silke, Dr., 47829 Krefeld (DE); Bunzel, Lothar, 47906 Kempen (DE); Deml, Hans, 47800 Krefeld (DE)

(56) Entgegenhaltungen:
- EP-A- 0 544 407
- DE-A- 19 646 401
- DATABASE WPI Section Ch, Week 198745 Derwent Publications Ltd., London, GB; Class A23, AN 1987-318663 XP002236087 & JP 62 227927 A (IDEMITSU KOSAN CO LTD), 6. Oktober 1987 (1987-10-06)

## Beschreibung

Gegenstand der vorliegenden Erfindung ist ein Verfahren zur Herstellung von transparenten Copolycarbonaten mit einem Anteil an Dihydroxydiphenylen von mehr als 35 mol-%, die daraus erhältlichen transparenten Copolycarbonate selbst, sowie Formkörper und Extrudate aus diesen Polycarbonaten.

Es sind bereits Copolycarbonate auf Basis von 4,4'-Dihydroxydiphenyl und 2,2-Bis(4-hydroxyphenyl)propan (Bisphenol A) aus JP-A 5117382, JP-A 62227927 und JP-A 61264020 bekannt und in EP-A1 0 544 407, US-A 5 470 938, US-A 5 532 324 und US-A 5 401 826 als besonders chemikalienresistent, hitzebeständig und schwer entflammbar beschrieben, bei, im Vergleich zu handelsüblichem Polycarbonat aus reinem Bisphenol A, gleichen mechanischen Eigenschaften und Transparenz.

Auch die Herstellung der Copolycarbonate über das Schmelzeumesterungsverfahren ist geläufig. Dies ist ebenfalls in EP-A1 0 544 407 oder DE-A 196 46 401 beschrieben. Der Einbau von mehr als 35 mol-% Dihydroxydiphenyl wird jedoch nicht anhand von Beispielen belegt und führt nach eigenen Untersuchungen in der Regel zu nicht-transparenten Produkten.

Es findet sich im Stand der Technik jedoch keinerlei Hinweis darauf, wie dies zu verhindern ist.

Die Aufgabe bestand also darin, ein Verfahren zur Herstellung von Copolycarbonaten mit Dihydroxydiphenylen zu finden, das bei einem Anteil von mehr als 35 mol-% Dihydroxydiphenyl transparente Polymere ergibt.

Es wurde nun überraschenderweise gefunden, dass man transparente Copolycarbonate mit > 35 mol-% DOD erhält, wenn man sie nach dem Schmelzumesterungsverfahren herstellt und dabei die Aufheizphase im Mittelviskosbereich während des Prozesses auf max. 40 min. im Reaktionsgefäß begrenzt.

Die vorliegende Erfindung betrifft daher die Herstellung von Copolycarbonaten über das Schmelzeumesterungsverfahren, die aus 41 mol-% bis 60 mol-%, vorzugsweise 41 mol % bis 50 mol %, Verbindungen der Formel (I), 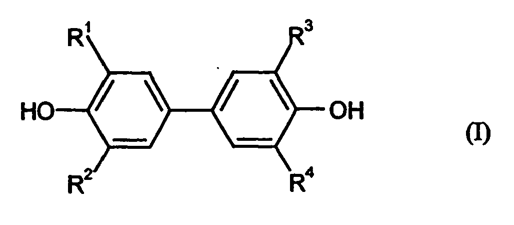 worin R¹ bis R⁴ unabhängig voneinander für H, C₁-C₄-Alkyl, Phenyl, substituiertes Phenyl oder Halogen stehen, bevorzugt für H, C₁-C₄-Alkyl oder Halogen stehen und besonders bevorzugt alle für den gleichen Rest, insbesondere für H oder tert.-Butyl stehen, und komplementären Mengen, also 59 mol-% bis 40 mol-%, bevorzugt 59 mol-% bis 50 mol-%, an Verbindungen der Formel (II) 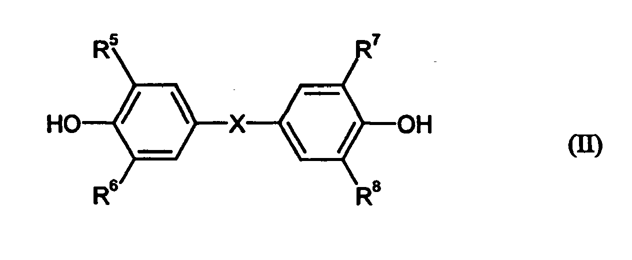 worin R⁵ bis R⁸ unabhängig voneinander H, CH₃, Cl oder Br sind und X C₁-C₅-Alkylen, C₂-C₅-Alkyliden, C₅-C₆-Cycloalkylen, C₅-C₁₀-Cycloalkyliden ist, als Bisphenolmonomere aufgebaut sind, dadurch gekennzeichnet, dass die Endtemperatur von 270 bis 330°C, bevorzugt 280 bis 320°C, besonders bevorzugt von 290 bis 300°C, innerhalb von weniger als 40 Minuten, ausgehend von 220 bis 240°C, bevorzugt von 235°C, erreicht wird, bevorzugt innerhalb von weniger als 30 Minuten.

Die Ausgangstemperatur von 220 bis 240°C, bevorzugt 235°C, ist so zu verstehen, dass die Reaktionsmischung zunächst, wie aus dem Stand der Technik (z.B. DE-A 196 46 401) bekannt, unter fortwährender Kondensation bis auf diese 220 bis 240°C, bevorzugt 235°C, aufgeheizt wird. Anschließend muss im Reaktionsgefäß, in dieser kritischen Phase, rasch, d. h. innerhalb von weniger als 40, bevorzugt 30, Minuten, auf die Endtemperatur von 270 bis 330°C, bevorzugt 280 bis 320°C, besonders bevorzugt 290 bis 300°C, aufgeheizt werden, um ein transparentes Copolycarbonat zu erhalten.

Bevorzugte Verbindungen der Formel (I) sind 4,4'- Dihydroxydiphenyl (DOD), 4,4'-Dihydroxy-3,3',5,5'tetra(tert.-Butyl)diphenyl, 4,4'-Dihydroxy-3,3',5,5'tetra(n-Butyl)diphenyl, 4,4'-Dihydroxy-3,3',5,5'tetra(methyl)diphenyl und 4,4'-Dihydroxydiphenyl, besonders bevorzugt ist 4,4'- Dihydroxydiphenyl (DOD).

Bevorzugte Verbindungen der Formel (II) sind 2,2-Bis(4-hydroxyphenyl)propan, 1,1-Bis(4-hydroxyphenyl)-3,3,5-trimethylcyclohexan (Bisphenol TMC) und 1,3-Bis[2-(4-hydroxyphenyl)-2-propyl]benzol, 1,1-Bis(4-hydroxyphenyl)-1-phenylethan, 1,1-Bis(4-hydroxyphenyl)-cyclohexan, insbesondere 2,2-Bis(4-hydroxyphenyl)propan (Bisphenol A) und 1,1-Bis(4-hydroxyphenyl)-3,3,5-trimethylcyclohexan (Bisphenol TMC), ganz besonders bevorzugt 2,2-Bis(4-hydroxyphenyl)propan (Bisphenol A).

Es können sowohl eine Verbindung der Formel (I), unter Bildung binärer Copolycarbonate, als auch mehrere Verbindungen der Formel (I) verwendet werden.

Ebenso können sowohl eine Verbindung der Formel (II), unter Bildung binärer Copolycarbonate, als auch mehrere Verbindungen der Formel (II) verwendet werden.

Diarylcarbonate im Sinne vorliegender Erfindung sind solche Kohlensäurediester der Formel (III) 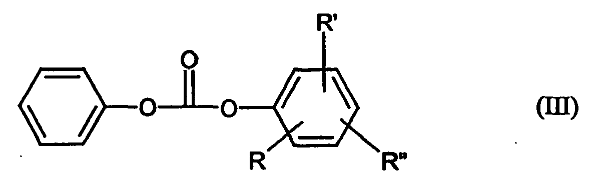 und Formel (IV), 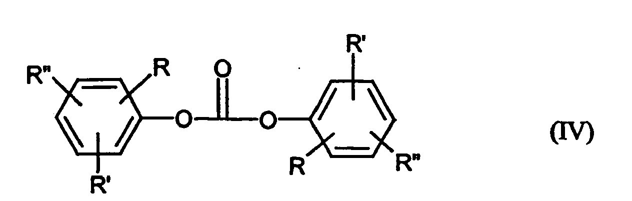 wobei R, R' und R" unabhängig voneinander H, gegebenenfalls verzweigte C₁-C₃₄-Alkyl/Cycloalkyl, C₇-C₃₄-Alkaryl oder C₆-C₃₄-Aryl darstellen können, beispielsweise Diphenylcarbonat, Butylphenyl-phenylcarbonat, Di-Butylphenylcarbonat, Isobutylphenyl-phenylcarbonat, Di-Isobutylphenylcarbonat, tert-Butylphenyl-phenylcarbonat, Di-tert-Butylphenylcarbonat, n-Pentylphenyl-phenylcarbonat, Di-(n-Pentylphenyl)carbonat, n-Hexylphenyl-phenylcarbonat, Di-(n-Hexylphenyl)carbonat, Cyclohexylphenyl-phenylcarbonat, Di-Cyclohexylphenylcarbonat, Phenylphenol-phenylcarbonat, Di-Phenylphenolcarbonat, Isooctylphenyl-phenylcarbonat, Di-Isooctylphenylcarbonat, n-Nonylphenyl-phenylcarbonat, Di-(n-Nonylphenyl)carbonat, Cumylphenyl-phenylcarbonat, Di-Cumylphenylcarbonat, Naphthylphenyl-phenylcarbonat, Di-Naphthylphenylcarbonat, Di-tert-Butylphenyl-phenylcarbonat, Di-(Ditert-Butylphenyl)carbonat, Dicumylphenyl-phenylcarbonat, Di-(Dicumylphenyl)-carbonat, 4-Phenoxyphenyl-phenylcarbonat, Di-(4-Phenoxyphenyl)carbonat, 3-Pentadecylphenyl-phenylcarbonat, Di-(3-Pentadecylphenyl)carbonat, Tritylphenylphenylcarbonat, Di-Tritylphenylcarbonat,
bevorzugt
Diphenylcarbonat, tert-Butylphenyl-phenylcarbonat, Di-tert-Butylphenylcarbonat, Phenylphenol-phenylcarbonat, Di-Phenylphenolcarbonat, Cumylphenyl-phenylcarbonat, Di-Cumylphenylcarbonat,
besonders bevorzugt Diphenylcarbonat.

Daneben können die als Carbonate eingesetzten phenolischen Verbindungen auch direkt als Hydroxyaryle neben einem der genannten Carbonate verwendet werden, um die Endgruppe des Polycarbonats zu beeinflussen. Bevorzugte Mischungen sind solche mit Diphenylcarbonat. Nach dem erfindungsgemäßen Verfahren besteht die Möglichkeit, das Hydroxyaryl oder die hydroxyaryltragende Verbindung zu jedem Zeitpunkt der Reaktion zuzugeben, bevorzugt zu Beginn der Reaktion, und die Zugabe kann in mehrere Portionen aufgeteilt werden. Der Anteil an freiem Hydroxyaryl kann 0,4 - 17 mol-%, bevorzugt 1,3 - 8,6 mol-% (bezogen auf die Dihydroxyverbindung) betragen. Dabei kann die Zugabe sowohl vor der Reaktion als auch ganz oder teilweise während der Reaktion erfolgen.

Die Kohlensäurediester werden, bezogen auf die Summe aus Dihydroxyverbindungen, im Verhältnis 1 zu 1 - 1,1, bevorzugt 1 : 1,0 - 1,07 eingesetzt, besonders bevorzugt 1: 1,02 - 1,06. Es können auch Mischungen der oben genannten Kohlensäurediester eingesetzt werden.

Für die Synthese können Ammonium- oder Phosphoniumverbindungen, im weiteren Verlauf auch gemeinsam als Oniumsalze bezeichnet, als Katalysatoren eingesetzt werden. Sie werden bevorzugt in Mengen von 0,0001 bis 0,01 mol-%, bezogen auf die Summe aus Dihydroxyverbindungen, besonders bevorzugt in Mengen von 0,002 bis 0,006 mol-%, eingesetzt.

Bevorzugt werden als Katalysator für die Herstellung der erfindungsgemäßen Copolycarbonate Phosphoniumsalze verwendet, gegebenenfalls in Kombination mit anderen geeigneten Katalysatoren, die nicht zu erhöhter Eigenfarbe führen.

Phosphoniumsalze im Sinne der Erfindung sind solche der Formel (V), 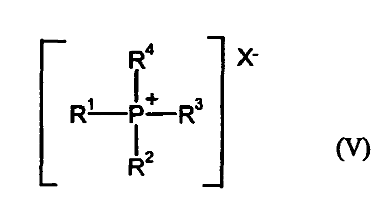 wobei R¹⁻⁴ dieselben oder verschiedene C₁-C₁₀-Alkyle, C₆-C₁₀-Aryle, C₇-C₁₀-Aralkyle oder C₅-C₆-Cycloalkyle sein können, bevorzugt Methyl oder C₆-C₁₄-Aryle, besonders bevorzugt Methyl oder Phenyl, und X⁻ ein Anion wie Hydroxid, Sulfat, Hydrogensulfat, Hydrogencarbonat, Carbonat, ein Halogenid, bevorzugt Chlorid, oder ein Alkoholat der Formel OR sein kann, wobei R C₆-C₁₄-Aryl oder C₇-C₁₂-Aralkyl, bevorzugt Phenyl, sein kann.

Bevorzugte Katalysatoren sind Tetraphenylphosphoniumchlorid, Tetraphenylphosphoniumhydroxid, Tetraphenylphosphoniumphenolat, besonders bevorzugt Tetraphenylphosphoniumphenolat.

Die Copolycarbonate können gezielt verzweigt werden und können daher geringe Mengen von 0,02 bis 5 mol-% (bezogen auf die Summe aus Dicarbonsäure und Dihydroxyverbindung) an Verzweigern enthalten. Geeignete Verzweiger sind die für die Polycarbonatherstellung geeigneten Verbindungen mit drei und mehr funktionellen Gruppen, vorzugsweise solche mit drei oder mehr als drei phenolischen OH-Gruppen, beispielsweise 1,1,1-Tri-(4-hydroxyphenyl)ethan und Isatinbiskresol.

Die Edukte und Katalysatoren der Formeln (I) bis (V) sind allgemein bekannt und größtenteils kommerziell bzw. nach bekannten Methoden erhältlich Die Herstellung von Bisphenolen ist allgemein in EP-A 720 976 beschrieben, die Herstellung von 4,4'-Dihydroxydiphenyl wird z.B. in JP 61200935 genannt.

Alle Rohstoffe können selbstverständlich Verunreinigungen, bedingt durch die Synthese, enthalten. Eine hohe Reinheit ist aber wünschenswert und anzustreben, daher werden diese Edukte mit der höchst möglichen Reinheit eingesetzt.

Die erfindungsgemäßen Copolycarbonate können Molekulargewichte zwischen Mw (gewichtsgemitteltes Molekulargewicht) 10.000 bis 60.000 aufweisen, bevorzugt Mw 20.000 bis 55.000, ermittelt durch Messung der relativen Lösungsviskosität in Dichlormethan oder in Mischungen gleicher Gewichtsmengen Phenol/o-Dichlorbenzol, geeicht durch Lichtstreuung, wie in Hans-Georg Elias, Makromoleküle, Hüthig & Wepf Verlag, Basel, New York 1990, 5. Aufl., S. 85-93 beschrieben.

Die erfindungsgemäßen Polycarbonate sind bei Temperaturen von 240°C bis 380°C, vorzugsweise von 260°C bis 360°C, in üblicher Weise thermoplastisch verarbeitbar. Durch Spritzguss oder via Extrusion können beliebige Formkörper und Folien in bekannter Weise hergestellt werden.

Die erfindungsgemäßen Polycarbonate sind in Lösungsmitteln wie chlorierten Kohlenwasserstoffen, z.B. Methylenchlorid, gut löslich und können somit beispielsweise in bekannter Weise zu Gießfolien verarbeitet werden.

Insbesondere können aus den hochmolekularen aromatischen Polycarbonaten der Erfindung Folien hergestellt werden. Die Folien haben bevorzugte Dicken zwischen 1 und 1500 µm, insbesondere bevorzugte Dicken zwischen 10 und 900 µm.

Die erhaltenen Folien können in an sich bekannter Weise monoaxial oder biaxial gereckt werden, bevorzugt im Verhältnis 1 : 1,5 bis 1 : 5.

Die Folien können nach den bekannten Verfahren zur Folienerzeugung hergestellt werden, z.B. durch Extrusion einer Polymerschmelze durch eine Breitschlitzdüse, durch Blasen auf einer Folienblasmaschine, durch Tiefziehen oder Gießen. Dabei ist es möglich, dass die Folien für sich allein verwendet werden. Man kann mit ihnen natürlich auch nach den herkömmlichen Verfahren Verbundfolien mit anderen Kunststoff-Folien herstellen, wobei prinzipiell, je nach gewünschter Anwendung und Endeigenschaft der Verbundfolie, alle bekannten Folien als Partner in Frage kommen. Es kann ein Verbund aus zwei oder mehr Folien erzeugt werden.

Daneben können die erfindungsgemäßen Copolycarbonate auch in anderen Schichtsystemen Anwendung finden, wie z.B. in coextrudierten Platten.

Zur Änderung der Eigenschaften können den erfindungsgemäßen Copolycarbonaten Hilfs- und Verstärkungsstoffe zugemischt werden. Als solche sind u. a. in Betracht zu ziehen: Thermo- und UV-Stabilisatoren, Fließhilfsmittel, Entformungsmittel, Flammschutzmittel, Pigmente, fein zerteilte Mineralien, Faserstoffe, z.B. Alkyl- und Arylphosphite, -phosphate, -phosphane, niedermolekulare Carbonsäureester, Halogenverbindungen, Salze, Kreide, Quarzmehl, Glas- und Kohlenstofffasern, Pigmente und deren Kombination. Solche Verbindungen werden z.B. in WO 99/55772, S. 15-25, und in "Plastics Additives", R. Gächter und H. Müller, Hanser Publishers 1983, beschrieben.

Weiterhin können den erfindungsgemäßen Copolycarbonaten auch andere Polymere zugemischt werden, z.B. Polyolefine, Polyurethane, Polyester, Acrylnitrilbutadienstyrol und Polystyrol.

Der Zusatz dieser Stoffe erfolgt vorzugsweise auf herkömmlichen Aggregaten zum fertigen Polycarbonat, kann jedoch, je nach den Erfordernissen, auch auf einer anderen Stufe des Herstellverfahrens erfolgen.

Die nach dem erfindungsgemäßen Verfahren erhältlichen Polycarbonate können auf üblichen Maschinen, beispielsweise auf Extrudern oder Spritzgussmaschinen, zu beliebigen Formkörpern, beispielsweise zu Folien oder Platten, in üblicher Weise verarbeitet werden.

Ein weiterer Gegenstand der vorliegenden Erfindung ist daneben die Verwendung der erfindungsgemäßen Polycarbonate bzw. der entsprechenden Formmassen zur Herstellung von Formkörpern und Extrudaten, insbesondere optischen Artikeln, Folien und Platten, bzw. die entsprechenden Formkörper, vorzugsweise optischen Artikel, hergestellt aus den erfindungsgemäßen Polycarbonaten.

Die Kombination von Eigenschaften wie Wärmeformbeständigkeit und Chemikalienbeständigkeit ermöglicht einen breiten Einsatz der erfindungsgemäßen Copolymere. Mögliche Anwendungen der erfindungsgemäßen Polycarbonate sind, ohne sie einschränken zu wollen,
1. Sicherheitsscheiben, die bekanntlich in vielen Bereichen von Gebäuden, Fahrzeugen und Flugzeugen erforderlich sind, sowie als Schilde von Helmen.
2. Herstellung von Folien, insbesondere Skifolien.
3. Herstellung von Blaskörpern (siehe beispielsweise US-Patent 2 964 794), beispielsweise 1 bis 5 Gallon Wasserflaschen.
4. Herstellung von lichtdurchlässigen Platten, insbesondere von Hohlkammerplatten, beispielsweise zum Abdecken von Gebäuden wie Bahnhöfen, Gewächshäusern und Beleuchtungsanlagen.
5. Herstellung optischer Datenspeicher.
6. Zur Herstellung von Ampelgehäusen oder Verkehrsschildern.
7. Zur Herstellung von Schaumstoffen (siehe beispielsweise DE-AS 1 031 507).
8. Zur Herstellung von Fäden und Drähten (siehe beispielsweise DE-AS 1 137 167 und DE-OS 1 785 137).
9. Als transluzente Kunststoffe mit einem Gehalt an Glasfasern für lichttechnische Zwecke (siehe beispielsweise DE-OS 1 554 020).
10. Als transluzente Kunststoffe mit einem Gehalt an Bariumsulfat, Titandioxid und oder Zirkoniumoxid bzw. organischen polymeren Acrylatkautschuken (EP 634 445, EP 269 324) zur Herstellung von lichtdurchlässigen und lichtstreunenden Formteilen.
11. Zur Herstellung von Präzisionsspritzgussteilchen, wie beispielsweise Linsenhalterungen. Hierzu verwendet man Polycarbonate mit einem Gehalt an Glasfasern, die gegebenenfalls zusätzlich etwa 1 - 10 Gew.-% MoS₂, bezogen auf Gesamtgewicht, enthalten.
12. Zur Herstellung optischer Geräteteile, insbesondere Linsen für Foto- und Filmkameras (siehe beispielsweise DE-OS 2 701 173).
13. Als Lichtübertragungsträger, insbesondere als Lichtleiterkabel (siehe beispielsweise EP-A1 0 089 801).
14. Als Elektroisolierstoffe für elektrische Leiter und für Steckergehäuse sowie Steckverbinder.
15. Herstellung von Mobiltelefongehäusen mit verbesserter Beständigkeit gegenüber Parfüm, Rasierwasser und Hautschweiß.
16. Network interface devices
17. Als Trägermaterial für organische Fotoleiter.
18. Zur Herstellung von Leuchten, z.B. Scheinwerferlampen, als sogenannte "head-lamps" oder Streulichtscheiben oder innere Linsen.
19. Für medizinische Anwendungen, z.B. Oxygenatoren, Dialysatoren.
20. Für Lebensmittelanwendungen, wie z.B. Flaschen, Geschirr und Schokoladenformen.
21. Für Anwendungen im Automobilbereich, wo Kontakt zu Kraftstoffen und Schmiermitteln auftreten kann, wie beispielsweise Stoßfänger ggf. in Form geeigneter Blends mit ABS oder geeigneten Kautschuken.
22. Für Sportartikel, wie z.B. Slalomstangen oder Skischuhschnallen.
23. Für Haushaltsartikel, wie z.B. Küchenspülen und Briefkastengehäuse.
24. Für Gehäuse, wie z.B. Elektroverteilerschränke
25. Gehäuse für Elektrozahnbürsten und Föngehäuse
26. Transparente Waschmaschinen - Bullaugen mit verbesserter Beständigkeit gegenüber der Waschlösung.
27. Schutzbrillen, optische Korrekturbrillen.
28. Lampenabdeckungen für Kücheneinrichtungen mit verbesserter Beständigkeit gegenüber Küchendunst insbesondere Öldämpfen.
29. Verpackungsfolien für Arzneimittel.
30. Chip-Boxen und Chip-Träger
31. Für sonstige Anwendungen, wie z.B. Stallmasttüren oder Tierkäfige.

Die nachfolgenden Beispiele sollen die vorliegende Erfindung illustrieren, ohne sie jedoch einzuschränken:

### Beispiele

Die relative Lösungsviskosität wurde in Dichlormethan bei einer Konzentration von 5 g/l bei 25°C bestimmt, geeicht durch Lichtstreuung.

Der Gehalt an phenolischem OH wird durch IR-Messung erhalten. Zu diesem Zweck wird eine Differenzmessung von einer Lösung aus 2 g Polymer in 50 ml Dichlormethan gegenüber reinem Dichlormethan vermessen und die Extinktionsdifferenz bei 3582 cm⁻¹ bestimmt.

### Beispiel 1 (nicht erfindungsgemäß)

In einem 500 ml Dreihalskolben mit Rührer, Innenthermometer und Vigreuxkolonne (30 cm, verspiegelt) mit Brücke werden 27,40 g (0,12 mol) Bisphenol A, 14,88 g (0,08 mol) 4,4'-Dihydroxydiphenyl, 44,99 g (0,21 mol) Diphenylcarbonat und 4,9 mg (8 · 10⁻⁶ mol) Tetraphenylphosphoniumphenolat (wird als Mischkristall mit 30 Gew.-% Phenol bezogen auf den Mischkristall zudosiert) eingewogen. Die Apparatur wird durch Anlegen von Vakuum und Spülen mit Stickstoff (dreimal) vom Luftsauerstoff befreit und das Gemisch bei 150°C aufgeschmolzen. Die Temperatur auf 190°C erhöht und das entstehende Phenol über 30 Minuten abdestilliert, dann wird das Vakuum auf 100 mbar eingestellt und 20 Minuten gerührt. Nun wird die Temperatur auf 235°C erhöht, nach 15 Minuten das Vakuum auf 60 mbar und nach weiteren 15 Minuten die Temperatur auf 270°C eingestellt. Nach wiederum 15 Minuten wird das Vakuum auf 5 mbar erhöht und 15 Minuten später die Temperatur auf 280°C. Nach 15 Minuten werden 0,5 mbar angelegt, 15 Minuten gerührt, und für 30 Minuten bei 300°C gerührt. Die Ergebnisse sind in Tabelle 1 zusammengefasst.

### Beispiel 2

In einem 500 ml Dreihalskolben mit Rührer, Innenthermometer und Vigreuxkolonne (30 cm, verspiegelt) mit Brücke werden 26,94 g (0,118 mol) Bisphenol A, 15,25 g (0,082 mol) 4,4'-Dihydroxydiphenyl, 46,70 g (0,22 mol) Diphenylcarbonat und 69 µl einer 5 %igen Lösung aus Tetraphenylphosphoniumphenolat in Phenol/Wasser 9:1 eingewogen. Die Apparatur wird durch Anlegen von Vakuum und Spülen mit Stickstoff (dreimal) vom Luftsauerstoff befreit und das Gemisch bei 150°C aufgeschmolzen. Das Vakuum wird auf 100 mbar eingestellt, die Temperatur auf 190°C erhöht und das entstehende Phenol über 30 Minuten abdestilliert. Nun wird die Temperatur auf 235°C erhöht, nach 15 Minuten die Temperatur innerhalb von 10 Minuten auf 300°C eingestellt. Nun wird das Vakuum stufenweise bis auf 0,5 mbar verbessert, sobald die Destillation nachlässt. Anschließend wird für 30 Minuten bei 300°C gerührt. Die Ergebnisse sind in Tabelle 1 zusammengefasst.

### Beispiel 3

In einem 500 ml Dreihalskolben mit Rührer, Innenthermometer und Vigreuxkolonne (30 cm, verspiegelt) mit Brücke werden 62,78 g (0,28 mol) Bisphenol A, 41,85 g (0,23 mol) 4,4'-Dihydroxydiphenyl, 110,32 g (0,52 mol) Diphenylcarbonat und 12,3 mg (2 · 10⁻⁵ mol) Tetraphenylphosphoniumphenolat (wird als Mischkristall mit 30 Gew.-% Phenol bezogen auf den Mischkristall zudosiert) eingewogen. Die Apparatur wird durch Anlegen von Vakuum und Spülen mit Stickstoff (dreimal) vom Luftsauerstoff befreit und das Gemisch bei 150°C aufgeschmolzen. Das Vakuum wird auf 100 mbar eingestellt, die Temperatur auf 190°C erhöht und das entstehende Phenol über 60 Minuten abdestilliert. Nun wird die Temperatur auf 235°C erhöht, nach 30 Minuten die Temperatur auf 300°C eingestellt. Nun wird das Vakuum stufenweise bis auf 0,5 mbar verbessert, sobald die Destillation nachlässt. Anschließend wird für 30 Minuten bei 300°C gerührt. Die Ergebnisse sind in Tabelle 1 zusammengefasst.

### Beispiel 4

Wie Beispiel 3, es werden jedoch 57,07 g (0,25 mol) Bisphenol A, 46,50 g (0,25 mol) 4,4'-Dihydroxydiphenyl, 112,47 g (0,53 mol) Diphenylcarbonat und 12,3 mg (2 · 10⁻⁵ mol) Tetraphenylphosphoniumphenolat (wird als Mischkristall mit 30 Gew.-% Phenol bezogen auf den Mischkristall zudosiert) eingewogen. Die Ergebnisse sind in Tabelle 1 zusammengefasst.

### Vergleichsbeispiel 1

627,810 g (2,75 mol) Bisphenol A, 418,50 g (2,25 mol) 4,4'-Dihydroxydiphenyl, 1103,23 g (5,16 mol) Diphenylcarbonat und 0,123 g (2 · 10⁻⁴ mol) Tetraphenylphosphoniumphenolat (wird als Mischkristall mit 30 Gew.-% Phenol bezogen auf den Mischkristall zudosiert) werden in einen Rührbehälter eingewogen. Der Behälter wird durch Anlegen von Vakuum und Spülen mit Stickstoff (dreimal) vom Luftsauerstoff befreit und das Gemisch bei 150°C und 100 mbar aufgeschmolzen. Die Temperatur wird auf 190°C erhöht und das entstehende Phenol über 45 Minuten abdestilliert. Nun wird innerhalb von 45 Minuten die Temperatur auf 330°C erhöht. Nun wird das Vakuum stufenweise bis auf 0,5 mbar verbessert, sobald die Destillation nachlässt. Anschließend wird für 30 Minuten bei 330°C gerührt. Die Ergebnisse sind in Tabelle 1 zusammengefasst.

### Vergleichsbeispiel 2

In einem 500 ml Dreihalskolben mit Rührer, Innenthermometer und Vigreuxkolonne (30 cm, verspiegelt) mit Brücke werden 22,83 g (0,1 mol) Bisphenol A, 18,60 g (0,1 mol) 4,4'-Dihydroxydiphenyl, 44,99 g (0,21 mol) Diphenylcarbonat und 4,9 mg (8 · 10⁻⁶ mol) Tetraphenylphosphoniumphenolat (wird als Mischkristall mit 30 Gew.-% Phenol bezogen auf den Mischkristall zudosiert) eingewogen. Die Apparatur wird durch Anlegen von Vakuum und Spülen mit Stickstoff (dreimal) vom Luftsauerstoff befreit und das Gemisch bei 150°C aufgeschmolzen. Das Vakuum wird auf 100 mbar eingestellt, die Temperatur auf 190°C erhöht und das entstehende Phenol über 20 Minuten abdestilliert. Nun wird die Temperatur auf 235°C erhöht, nach 15 Minuten wird das Vakuum auf 60 mbar eingestellt und 15 Minuten gerührt. Nun wird auf 270°C erhitzt und nach 15 Minuten das Vakuum langsam auf 5 mbar erhöht. Nach weiteren 15 Minuten wird die Temperatur innerhalb von 10 Minuten auf 300°C eingestellt. Nach 15 Minuten wird das Vakuum bis auf 0,5 mbar verbessert. Anschließend wird nach 15 Minuten die Temperatur auf 320 °C gestellt und für 30 Minuten gerührt. Die Ergebnisse sind in Tabelle 1 zusammengefasst.

**Tabelle 1: Vergleich der Copolycarbonate**

| Nr. | Gehalt BPA : DOD | relative Lösungsviskosität | Transparenz |
|---|---|---|---|
| Bsp. 1* | 60 : 40 | 1,316 | transparent |
| Bsp. 2 | 59 : 41 | 1,309 | transparent |
| Bsp. 3 | 55 : 45 | 1,388 | transparent |
| Bsp. 4 | 50 : 50 | 1,336 | transparent |
| Vergl.bsp. 1 | 55 : 45 | 1,238 | intransparent |
| Vergl.bsp. 2 | 50 : 50 | unlöslich | intransparent |

| | | | |
|---|---|---|---|
| BPA: Bisphenol A DOD: 4,4'-Dihydroxydiphenyl * nicht erfindungsgemäß | | | |

Die Versuchsergebnisse belegen klar die überraschende Überlegenheit des erfindungsgemäßen Verfahrens über den Stand der Technik.

Trotz sogar erhöhter Endtemperatur wird im Vergleichsbeispiel 1 keine den erfindungsgemäßen Beispielen vergleichbare Viskosität (und damit Molmasse) erreicht, wobei ohnehin nur ein intransparentes Material erhalten wird. Im Vergleichsbeispiel 2 wird sogar lediglich ein unlösliches und damit in der Regel auch als Thermoplast unbrauchbares Material erhalten.

## Patentansprüche

1. Verfahren zur Herstellung von Copolycarbonaten über das Schmelzeumesterungsverfahren, die aus 41 mol-% bis 60 mol-% Verbindungen der Formel (I), 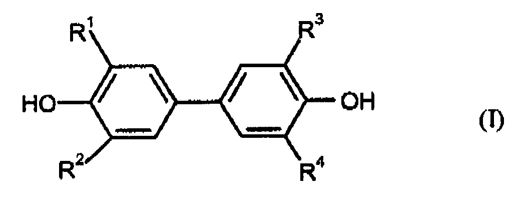 worin R¹ bis R⁴ unabhängig voneinander für H, C₁-C₄-Alkyl, Phenyl, substituiertes Phenyl oder Halogen stehen und komplementären Mengen, also 59 mol-% bis 40 mol-% an Verbindungen der Formel (II) 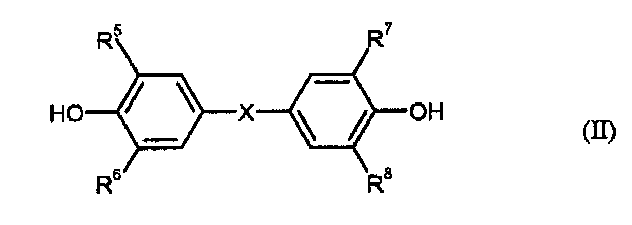 worin R⁵ bis R⁸ unabhängig voneinander H, CH₃, Cl oder Br sind und X C₁-C₅-Alkylen, C₂-C₅-Alkyliden, C₅-C₆-Cycloalkylen, C₅-C₁₀-Cycloalkyliden ist, als Bisphenolmonomere aufgebaut sind, **dadurch gekennzeichnet, dass** die Endtemperatur von 270 bis 330°C innerhalb von weniger als 40 Minuten, ausgehend von 220 bis 240°C, erreicht wird.

2. Verfahren gemäß Anspruch 1, **dadurch gekennzeichnet, dass** die Herstellung von Copolycarbonaten über das Schmelzeumesterungsverfahren, die aus 41 mol-% bis 50 mol-% Verbindungen der Formel (I) und komplementären Mengen, also 59 mol-% bis 50 mol-% an Verbindungen der Formel (II) bestehen.

3. Herstellung der Copolycarbonate gemäß Anspruch 1, **dadurch gekennzeichnet, dass** der Katalysator ein Oniumsalz ist.

4. Herstellung der Copolycarbonate gemäß Anspruch 1, **dadurch gekennzeichnet, dass** der Katalysator Tetraphenylphosphoniumphenolat ist.

5. Herstellung der Copolycarbonate gemäß Anspruch 1, **dadurch gekennzeichnet, dass** der Katalysator in Mengen von 10⁻³ bis 10⁻⁸ mol, bezogen auf die Summe an Bisphenol, eingesetzt wird.

6. Copolycarbonate enthaltend 41 mol % oder mehr an Dihydroxyverbindungen der Formel (I) die gemäß Anspruch 1 aufgebaut sind, **dadurch gekennzeichnet, dass** sie transparent sind.

7. Verwendung der Copolycarbonate gemäß Anspruch 5 zur Herstellung von Formkörpern und Extrudaten.

8. Copolycarbonate gemäß Anspruch 5, **dadurch gekennzeichnet, dass** das Monomer der Formel (I) 4,4'-Dihydroxydiphenyl und das Monomer der Formel (II) Bisphenol A ist.

## Claims

1. Process for the preparation of copolycarbonates via the melt transesterification process, which are built up from 41 mol% to 60 mol% of compounds of the formula (I) 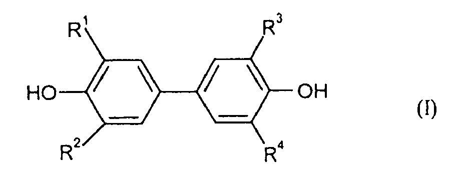 wherein R¹ to R⁴ independently of one another represent H, C₁-C₄-alkyl, phenyl, substituted phenyl or halogen, and complementary amounts, that is to say 59 mol% to 40 mol%, of compounds of the formula (II) 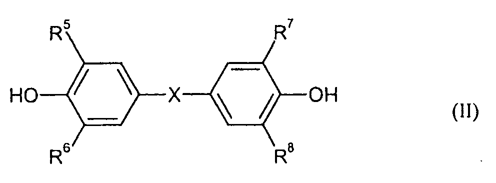 wherein R⁵ to R⁸ independently of one another are H, CH₃, Cl or Br and X is C₁-C₅-alkylene, C₂-C₅-alkylidene, C₅-C₆-cycloalkylene or C₅-C₁₀-cycloalkylidene, as bisphenol monomers, **characterized in that** the final temperature of 270 to 330°C is reached within less than 40 minutes, starting from 220 to 240°C.

2. Process according to claim 1, **characterized in that** the preparation of copolycarbonates via the melt transesterification process, which comprise 41 mol% to 50 mol% of compounds of the formula (I) and complementary amounts, that is to say 59 mol% to 50 mol% of compounds of the formula (II).

3. Preparation of the copolycarbonates according to claim 1, **characterized in that** the catalyst is an onium salt.

4. Preparation of the copolycarbonates according to claim 1, **characterized in that** the catalyst is tetraphenylphosphonium phenolate.

5. Preparation of the copolycarbonates according to claim 1, **characterized in that** the catalyst is employed in amounts of 10⁻³ to 10⁻⁸ mol, based on the total of bisphenol.

6. Copolycarbonates comprising 41 mol% or more of dihydroxy compounds of the formula (I) which are built up according to claim 1, **characterized in that** they are transparent.

7. Use of the copolycarbonates according to claim 5 for the production of shaped articles and extrudates.

8. Copolycarbonates according to claim 5, **characterized in that** the monomer of the formula (I) is 4,4'-dihydroxydiphenyl and the monomer of the formula (II) is bisphenol A.

## Revendications

1. Procédé de préparation de copolycarbonates par le procédé de transestérification à l'état fondu, qui sont élaborés à partir de 41% en moles à 60% en moles de composés de la formule (I) : 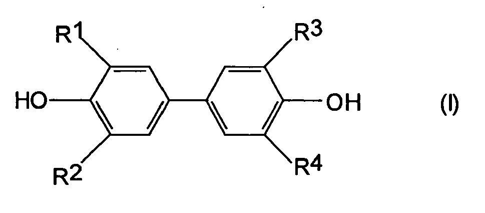 où R¹ à R⁴ représentent indépendamment l'un de l'autre, H, alcoyle en C₁-C₄, phényle, phényle substitué ou halogène, et des quantités complémentaires, à savoir de 59% en moles à 40% en moles de composés de la formule II : 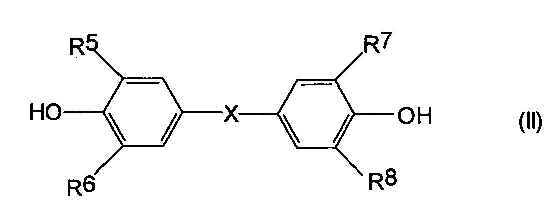 où R⁵ à R⁸ représentent indépendamment l'un de l'autre, H, CH₃, Cl ou Br et X est alcoylène en C₁-C₅, alcoylidène en C₂-C₅, cycloalcoylène en C₅-C₆, cycloalcoylidène en C₅-C₁₀, comme monomères bisphénol, **caractérisé en ce que** la température finale allant de 370 à 330°C est atteinte en moins de 40 minutes, en partant de 220à 240°C.

2. Procédé selon la revendication 1, **caractérisé par** la préparation de copolycarbonates par le procédé de transestérification à l'état fondu, lesquels consistent en 41% en moles à 50% en moles des composés de la formule (I) et en des quantités complémentaires, à savoir 59% en moles à 50% en moles des composés de la formule (II).

3. Préparation de copolycarbonates selon la revendication 1, **caractérisée en ce que** le catalyseur est un sel d'onium.

4. Préparation de copolycarbonates selon la revendication 1, **caractérisée en ce que** le catalyseur est le phénolate de tétraphénylphosphonium.

5. Préparation de copolycarbonates selon la revendication 1, **caractérisée en ce que** le catalyseur est mis en oeuvre en des quantités allant de 10⁻³ à 10⁻⁸ moles, sur base de la somme des bisphénols.

6. Copolycarbonates contenant 41% en moles ou plus de composés dihydroxylés de formule (I), qui sont élaborés selon la revendication 1, **caractérisés en ce qu'**ils sont transparents.

7. Utilisation des copolycarbonates selon la revendication 5, pour la préparation de corps moulés et d'extrudats.

8. Copolycarbonates selon la revendication 5, **caractérisés en ce que** le monomère de formule (I) est le 4,4'-dihydroxydiphényle et le monomère de formule (II) est le bisphénol A.
